# EUROPEAN PATENT APPLICATION

(11) **EP 3 434 347 A1**
(43) Date of publication of application: **30.01.2019**
(21) Application number: 18184429.1
(22) Date of filing: 19.07.2018
(51) Int. Cl.: B01D 19/00, B01D 69/08

(54) **FUEL TANK DE-OXYGENATION SYSTEM**

(30) Priority: 24.07.2017 US 201715657432
(71) Applicant: Hamilton Sundstrand Corporation, Charlotte, NC 28217-4578 (US)
(72) Inventor: RHODEN, William E., Glastonbury, CT Connecticut 06033 (US); CORDATOS, Haralambos, Colchesster, CT Connecticut 06415 (US)
(74) Representative: Dehns

(57) **Abstract**

A fuel de-oxygenation system includes a boost pump (18) and an oxygen collector (14). The collector (14) includes an input port (20) fluidly connected to an output of the boost pump (18), an output port (122) in fluid communication with the input port (20), and one or more hollow fiber tubes disposed within the oxygen collector (14), the hollow fiber tubes having an oxygen permeable membrane (36) disposed thereon. The system also includes a nitrogen source 836) in fluid communication with the one or more hollow fiber tubes that causes the formation of a nitrogen containing sweep gas channel within the one or more hollow fiber tubes.

## Description

### BACKGROUND

Exemplary embodiments pertain to the art of fuel system and, in particular, to de-oxygenating jet fuel in an aircraft fuel system.

Jet fuel is often utilized in aircraft as a coolant for various aircraft systems. The presence of dissolved oxygen in hydrocarbon jet fuels may be objectionable because the oxygen supports oxidation reactions that yield undesirable by-products. Dissolution of air in jet fuel results in an approximately 70 ppm oxygen concentration. When aerated fuel is heated between 350° F. and 850° F. the oxygen initiates free radical reactions of the fuel resulting in deposits commonly referred to as "coke" or "coking." Coke may be detrimental to the fuel lines and may inhibit combustion. The formation of such deposits may impair the normal functioning of a fuel system, either with respect to an intended heat exchange function or the efficient injection of fuel.

Various conventional fuel de-oxygenation techniques are currently utilized to de-oxygenate fuel. Typically, lowering the oxygen concentration to approximately 6 ppm or less is sufficient to overcome the coking problem.

One conventional Fuel Stabilization Unit (FSU) utilized in aircraft removes oxygen from jet fuel by producing an oxygen partial pressure gradient across an oxygen permeable membrane. The membrane is in contact with fuel flow and is supported on a porous backing plate such that oxygen may be extracted from the fuel.

Although quite effective, a very small amount of fuel may leak through the 6-12 angstrom-sized pores of the oxygen permeable membrane. The rate of fuel leakage is inversely proportional to the thickness of the membrane: however, the rate of oxygen removal is also inversely proportional to membrane thickness. Therefore, an increase in membrane thickness will reduce fuel leakages, but the increase will also proportionally reduce de-oxygenation. However, minor fuel leakage may be detrimental in that, over a period of time, fuel may saturate the membrane, block the permeation of oxygen, and reduce de-oxygenation efficiency thereof.

Another approach is to utilize Teflon membranes. Such may be effective under low pressure conditions to de-oxygenate fuel but they require significant supporting structure to utilize them in high pressure (e.g., engine) applications.

### BRIEF DESCRIPTION

Disclosed in one embodiment is a fuel de-oxygenation system that includes a boost pump and an oxygen collector. The collector includes an input port fluidly connected to an output of the boost pump, an output port in fluid communication with the input port, and one or more hollow fiber tubes disposed within the oxygen collector, the hollow fiber tubes having an oxygen permeable membrane disposed thereon. The system also includes a nitrogen source in fluid communication with the one or more hollow fiber tubes that causes the formation of a nitrogen containing sweep gas channel within the one or more hollow fiber tubes.

In any prior embodiment, the oxygen collector further includes a manifold with one or more portions.

In any prior embodiment, wherein a first of the one or more manifold portions is connected to the nitrogen source.

In any prior embodiment, wherein a second of the one or more manifold portions is connected a vent.

In any prior embodiment, the oxygen permeable membrane includes an amorphous copolymer of perfluoro-2,2-dimethyl-1,3-dioxole (PDD).

In any prior embodiment, the oxygen permeable membrane includes a copolymer of 2,2,4-trifluoro-5-trifluoromethoxy-1,3-dioxole (TDD).

In any prior embodiment, in operation, the nitrogen source creates an oxygen partial pressure differential between walls of the collector and an inside of the one or more hollow fiber tubes.

In any prior embodiment, the oxygen collector and the boost pump are both disposed within a fuel reservoir.

In another embodiment, a method of de-oxygenating fuel is disclosed. The method includes: pumping fuel from a fuel reservoir with a boost pump through an oxygen collector, wherein the oxygen collector includes an input port fluidly connected to an output of the boost pump, an output port in fluid communication with the input port and one or more hollow fiber tubes disposed within the oxygen collector, the hollow fiber tubes having an oxygen permeable membrane disposed thereon; and while pumping fuel through the oxygen collector, providing nitrogen from a nitrogen source in fluid communication with the one or more hollow fiber tubes to cause the formation of an oxygen partial pressure differential between the fuel and an interior of the hollow fiber tubes to draw oxygen from fuel into the hollow fiber tubes.

In any prior embodiment, the oxygen collector includes a manifold with one or more portions, a first of the one or more manifold portions is connected to the nitrogen source and a second of the one or more manifold portions is connected a vent.

In any prior embodiment, the oxygen permeable membrane includes an amorphous copolymer of perfluoro-2,2-dimethyl-1,3-dioxole (PDD).

In any prior embodiment, the oxygen permeable membrane includes a copolymer of 2,2,4-trifluoro-5-trifluoromethoxy-1,3-dioxole (TDD).

In any prior embodiment, wherein the oxygen collector and the boost pump are both disposed within the fuel reservoir.

In any prior embodiment, the pressure of nitrogen from the nitrogen generation source can be controlled relative to fuel vapor pressure in the reservoir so that the oxygen permeable membrane on the hollow fiber tubes is not removed from the hollow fiber tubes.

### BRIEF DESCRIPTION OF THE DRAWINGS

The following descriptions should not be considered limiting in any way. With reference to the accompanying drawings, like elements are numbered alike:
FIG. 1 is schematic of a fuel system that includes a de-oxygenation system according to one embodiment;
FIG. 2 is a is schematic of a fuel system that includes a de-oxygenation system according to another embodiment;
FIG. 3 is cross section of an oxygen collector; and
FIG. 4 is cross section of a hollow fiber tube surrounded by an oxygen permeable membrane.

### DETAILED DESCRIPTION

A detailed description of one or more embodiments of the disclosed apparatus and method are presented herein by way of exemplification and not limitation with reference to the Figures.

In one embodiment a hollow fiber device that operates an oxygen collector is integrated into an aircraft fuel tank such that the tank's fuel boost pump moves fuel through the oxygen collector while inside the tank. Fuel flows around the fibers inside the collector on its way out of the tank. A nitrogen inlet port on the collector protrudes through the tank, supplying nitrogen to an internal portion of the hollow fiber tubes to cause oxygen molecules in the fuel to pass through the fiber wall out of the fuel toward the depleted oxygen region. The individual fibers are coated with an oxygen permeable membrane. An example of such a membrane is Teflon AF.

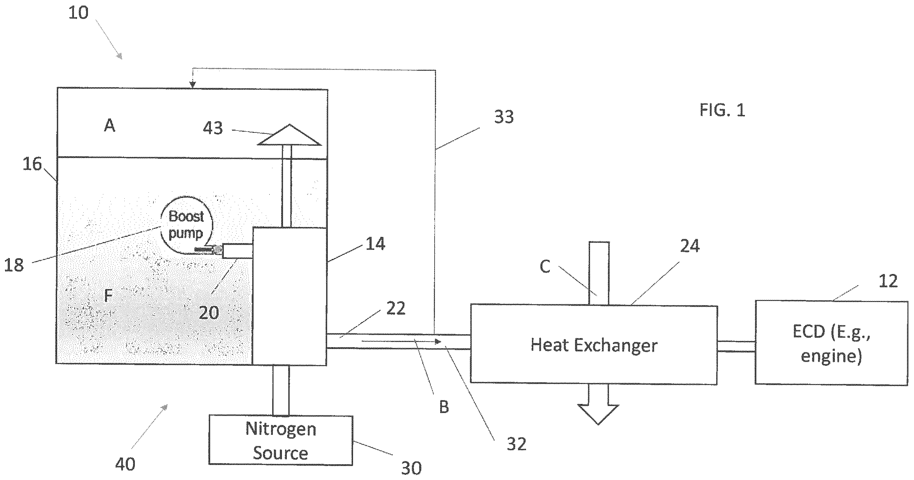

FIG. 1 illustrates a general schematic view of a fuel system 10 for an energy conversion device (ECD) 12. An oxygen collector (also referred to as a de-oxygenator) 14 receives liquid fuel F from a reservoir 16 such as a fuel tank. Reservoir 16 may also include a volume air A.

One form of the ECD 12 is a gas turbine engine, and particularly such engines in aircraft. Typically, the fuel also serves as a coolant for one or more subsystems in the aircraft and becomes heated as it is delivered to fuel injectors immediately prior to combustion.

The fuel F is typically a hydrocarbon such as jet fuel. The ECD 12 may exist in a variety of forms in which the fuel, at some point prior to eventual use for processing, for combustion, or for some form of energy release, acquires sufficient heat to support autoxidation reactions and coking if dissolved oxygen is present to any significant extent in the fuel.

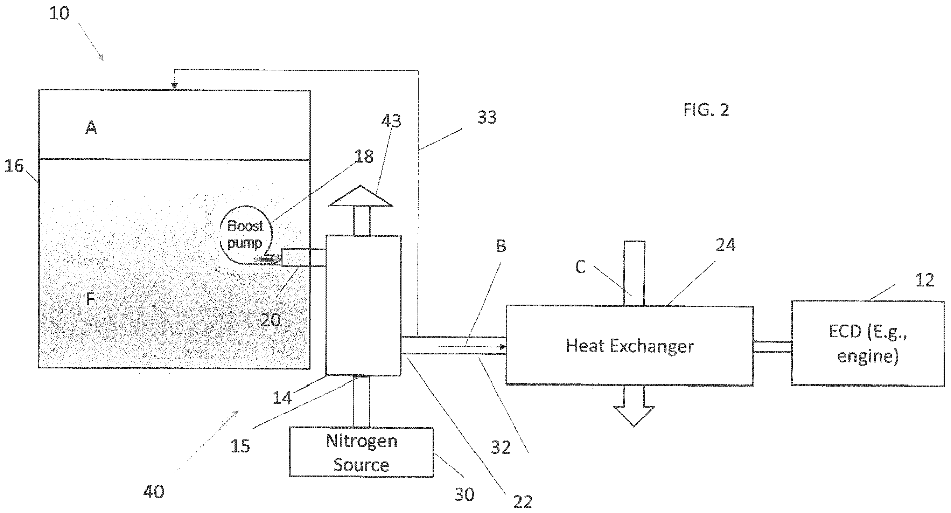

As illustrated, the oxygen collector 14 is disposed completely within the reservoir 16. Of course, it could be located only partially within or even outside of the reservoir 16. An embodiment where the collector 14 is outside of the reservoir 16 is generally shown in FIG. 2. The following discussion refers to FIG. 1 but is equally applicable to FIG. 2.

The collector 14 is part of a de-oxygenation system 40 that includes a boost pump 18 that can either inside (FIG. 1) or outside (FIG. 2) of the reservoir 16. The system 40 (and the collector 14) in particular, cause oxygen to be removed from the fuel F. This allows the fuel F to be used as coolant without coking.

The boost pump 18 can help to urge fuel F through the collector 14 from it its input (input port) 20 to its output (output port) 22. In some instance, the boost pump 18 can be omitted. The fuel exits the collector 14 with a reduced oxygen concentration. In one embodiment, fuel exits the collector with an oxygen concentration of about 35 ppm. The output 22 of the collector 14 is fluidly connected to a heat exchanger 24. The heat exchanger 24 causes the de-oxygenated fuel F (indicated by arrow B) to remove heat from a fluid or air flow generally shown by arrow C. The type of heat exchanger can is not limited and can be a cross or parallel flow heat exchanger.

The heat exchanger 24 represents a system through which the fuel passes in a heat exchange relationship. It should be understood that the heat exchanger 24 may be directly associated with the ECD 12 and/or distributed elsewhere in the larger system 10. The heat exchanger 18 may alternatively or additionally include a multiple of heat exchanges distributed throughout the system.

In general, and to summarize, fuel F stored in the reservoir 16 normally contains dissolved oxygen, possibly at a saturation level of 70 ppm. A boost pump 18 urges the fuel F from the reservoir 16 and through the collector 14 (into input 20 an out through output 22). The pressure applied by the boost pump 18 assists in circulating the fuel F through the collector 14 and other portions of the fuel system 10. As the fuel F passes through the collector 14, oxygen is selectively removed by the collector. In this embodiment, the nitrogen source 30 can form part of the oxygen removal system 40.

The de-oxygenated fuel C flows from the outlet 22 of the collector 14 via a de-oxygenated fuel conduit 32, to the heat exchanger 24 and to the ECD 12 such as the fuel injectors of a gas turbine engine. A portion of the de-oxygenated fuel may be recirculated, as represented by recirculation conduit 33 to the reservoir 16. It should be understood that although a particular component arrangement is disclosed in the illustrated embodiment, other arrangements will benefit from the instant invention.

FIG. 2 shows a system similar to FIG. 1 with the collector 14 disposed outside of the reservoir 16.

In both FIG. 1 and FIG. 2, the nitrogen source 30 causes the formation of sweep gas channel within the within the collector 14 to have a complete or at least partial vacuum formed therein. The tubes are surrounded by an oxygen permeable membrane. The concentration of oxygen in the fuel F is greater than the concentration of oxygen inside the tubes and this causes the oxygen in the fuel F to be drawn into the tubes and removed through vent 43. The nitrogen source 30 can be a nitrogen generation system such as those used in a fuel inerting system.

In more detail, as the nitrogen flows from the nitrogen inlet 15 of the collector 14 and traversed to the vent 43, it forms a sweep gas channel inside the tubes containing nitrogen and/or another inert gas. It should be understood that the channels may be of various shapes and arrangements to provide a pressure differential, which maintains an oxygen concentration differential across the membrane (discussed below) to de-oxygenate the fuel. The fuel and the sweep gas preferably flow in roughly perpendicular directions.

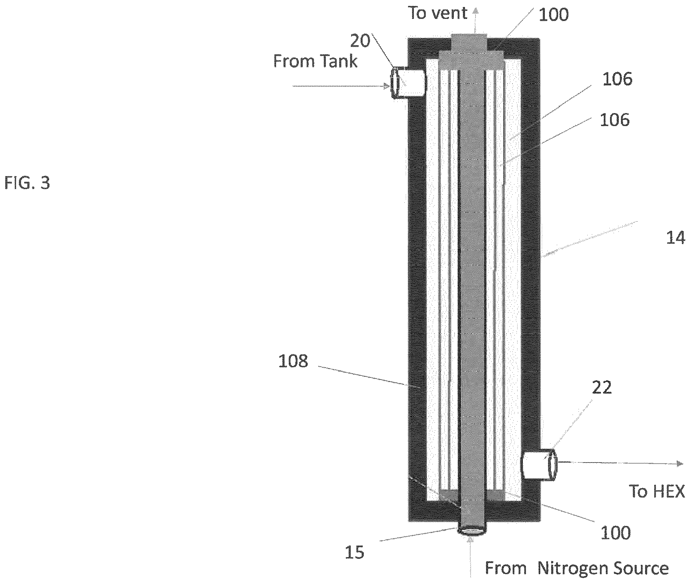

FIG. 3 shows a cross section of a collector 14 according to one embodiment. The collector 14 includes the inlet 20 and outlet 22 as described above. The collector 14 includes an outer body 108. Disposed within the outer body are two or more coated hollow fiber tubes 106. The hollow fiber tubes can be formed of any type of material that has spacing between them of at least the size of an oxygen molecule.

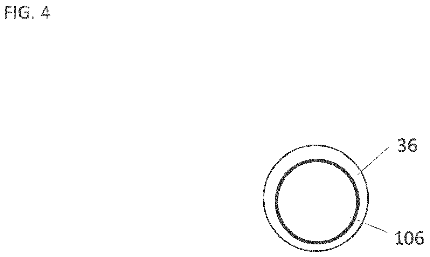

One or more of the tubes is coated with an oxygen permeable membrane 36 allows dissolved oxygen (and other gases) to diffuse through angstrom-size voids but excludes the larger fuel molecules. An example of one tube 106 is shown in cross section in FIG. 4 and includes the membrane 36 surrounding it. Alternatively, or in conjunction with the voids, the permeable membrane 36 utilizes a solution-diffusion mechanism to dissolve and diffuse oxygen (and/or other gases) through the membrane while excluding the fuel. The family of Teflon AF which is an amorphous copolymer of perfluoro-2,2-dimethyl-1,3-dioxole (PDD) often identified under the trademark "Teflon AF" registered to E. I. DuPont de Nemours of Wilmington, Del., USA, and the family of Hyflon AD which is a copolymer of 2,2,4-trifluoro-5-trifluoromethoxy-1,3-dioxole (TDD) registered to Solvay Solexis, Milan, Italy have proven to provide effective results for fuel de-oxygenation.

Referring again to FIG. 3, fuel flowing through the collector 14 passes between the tubes 106 and is in contact with the oxygen permeable membrane 36. The ends of the tubes 106 are connected to one portion of the manifold 100. The manifold 100 includes a nitrogen inlet 15 on another portion thereof. The nitrogen source 30 (FIG. 2) creates an oxygen partial pressure differential between the walls 108 of the collector 14 and the inside of the tubes 106 (e.g., across oxygen permeable membrane 36) which causes diffusion of oxygen dissolved within the fuel V to migrate through the tubes 106 and out of the collector 14. The oxygen is then expelled through the vent 43.

In one embodiment, the pressure of the nitrogen enriched gas from the nitrogen generation source 30 versus the fuel vapor pressure in the reservoir 14 to ensure that the membrane 36 in the collector 14 doesn't separate from its support structure. That is, the nitrogen generation source 30 can be controlled so that the pressure of the nitrogen (or nitrogen containing fluid) relative to fuel vapor pressure in the reservoir so that the oxygen permeable membrane on the hollow fiber tubes is not removed from the hollow fiber tubes.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel de-oxygenation system comprising:
a boost pump (18);
an oxygen collector (14) that includes:
an input port (20) fluidly connected to an output of the boost pump (18);
an output port (22) in fluid communication with the input port; and
one or more hollow fiber tubes disposed within the oxygen collector, the hollow fiber tubes having an oxygen permeable membrane disposed thereon; and
a nitrogen source (30) in fluid communication with the one or more hollow fiber tubes that causes the formation of a nitrogen containing sweep gas channel within the one or more hollow fiber tubes.

2. The system of claim 1, wherein the oxygen collector further includes a manifold with one or more portions.

3. The system of claim 2, wherein a first of the one or more manifold portions is connected to the nitrogen source.

4. The system of claim 3, wherein a second of the one or more manifold portions is connected a vent.

5. The system of any preceding claim, wherein the oxygen permeable membrane (36) includes an amorphous copolymer of perfluoro-2,2-dimethyl-1,3-dioxole (PDD).

6. The system of any of claims 1 to 4, wherein the oxygen permeable membrane (36) includes a copolymer of 2,2,4-trifluoro-5-trifluoromethoxy-1,3-dioxole (TDD).

7. The system of any preceding claim, wherein, in operation, the nitrogen source (30) creates an oxygen partial pressure differential between walls of the collector (14) and an inside of the one or more hollow fiber tubes.

8. The system of any preceding claim, wherein the oxygen collector (14) and the boost pump (18) are both disposed within a fuel reservoir.

9. A method of de-oxygenating fuel comprising:
pumping fuel from a fuel reservoir (16) with a boost pump (18) through an oxygen collector (14), wherein the oxygen collector (14) includes an input port (20) fluidly connected to an output of the boost pump (18), an output port (22) in fluid communication with the input port (20) and one or more hollow fiber tubes disposed within the oxygen collector (14), the hollow fiber tubes having an oxygen permeable membrane (36) disposed thereon; and
while pumping fuel through the oxygen collector (14), providing nitrogen from a nitrogen source (30) in fluid communication with the one or more hollow fiber tubes to cause the formation of an oxygen partial pressure differential between the fuel and an interior of the hollow fiber tubes to draw oxygen from fuel into the hollow fiber tubes.

10. The method of claim 9, wherein the oxygen collector (14) includes a manifold with one or more portions, a first of the one or more manifold portions is connected to the nitrogen source and a second of the one or more manifold portions is connected a vent.

11. The method of claim 9 or 10, wherein the oxygen permeable membrane (36) includes an amorphous copolymer of perfluoro-2,2-dimethyl-1,3-dioxole (PDD).

12. The system of claim 9 or 10, wherein the oxygen permeable membrane (36) includes a copolymer of 2,2,4-trifluoro-5-trifluoromethoxy-1,3-dioxole (TDD).

13. The method of any of claims 9 to 12, wherein the oxygen collector (14) and the boost pump (18) are both disposed within the fuel reservoir (16).

14. The method of any of claims 9 to 13, wherein a pressure of the nitrogen from the nitrogen source (30) is controlled relative to fuel vapor pressure in the reservoir (16) so that the oxygen permeable membrane (36) on the hollow fiber tubes is not removed from the hollow fiber tubes.
